# EUROPÄISCHE PATENTSCHRIFT

(11) **EP 2 335 919 B1**
(45) Veröffentlichungstag und Bekanntmachung des Hinweises auf die Patenterteilung: **16.11.2011**
(21) Anmeldenummer: 09014986.5
(22) Anmeldetag: 03.12.2009
(51) Int. Cl.: B32B 19/02, F16J 15/10, B32B 5/16, F01N 3/20, F01N 13/18

(54) **Abgasstrangdichtung**
Exhaust gas flow seal
Joint de faisceau de gaz d'échappement

(43) Veröffentlichungstag der Anmeldung: 22.06.2011
(73) Patentinhaber: Carl Freudenberg KG, 69469 Weinheim (DE)
(72) Erfinder: Klenk, Thomas, 69221 Dossenheim (DE); Bartl, Heike, 69469 Weinheim (DE); Sander, Hans-Gerhard, 69469 Weinheim (DE); Guengoermues, Erol, 64404 Bickenbach (DE)

(56) Entgegenhaltungen:
- WO-A2-2007/117701
- US-A- 3 660 184
- US-A- 4 137 993
- US-A- 4 402 518
- US-A- 4 443 517
- US-A- 4 601 476
- US-A- 5 615 897

## Beschreibung

### Beschreibung

### Technisches Gebiet

Die Erfindung betrifft eine Abgasstrangdichtung, enthaltend ein Laminat aus mindestens einer Vliesstoffschicht, die einen Vliesstoff aus anorganischen Fasem und mindestens einen anorganischen Füllstoff aufweist, und mindestens eine Haftklebstoffschicht. Die Erfindung betrifft auch Verwendungen der Dichtung, Verfahren zu ihrer Herstellung und Abgasstränge, welche die Dichtung enthalten.

### Stand der Technik

Bei Abgassystemen werden häufig mehrere Abgasstränge miteinander verbunden. Solche Verbindungsstellen werden mit einer Dichtung versehen, um zu verhindern, dass die Abgase entweichen. Bei Abgassystemen von Kraftfahrzeugen, insbesondere Lastkraftfahrzeugen, werden Teilstränge mittels eines Kugelzonentulpenverbinders miteinander verbunden. Dazu weist ein Ende eines ersten Teilstranges eine kugelförmige erste Querschnittserweiterung auf, die teilweise durch eine zweite tulpenförmige Querschnittserweiterung eines zweiten Teilstranges überdeckt wird. Eine Schelle übergreift die erste und die zweite Querschnittserweiterung und fixiert beide aneinander. Bislang war es bekannt, die sich zwischen erster und zweiter Querschnittserweiterung ergebende Dichtstelle mittels einer metallischen Sickendichtung abzudichten. Metellische Sickendichtungen weisen den Vorteil einer hohen Temperaturfestigkeit auf, allerdings genügen diese Dichtungen nicht erhöhten Dichtheitsanforderungen.

Die US 4,402,518 und US 5,615,897 offenbaren Dichtungsmaterialien, bel denen Metallbleche mit faserverstärkten Elastomerschichten versehen werden. Die Dichtungsmaterlallen weisen Jeweils Korkpartikel als Füllstoff auf.

Das US-Patent 4,443,517 offenbart papierähnliche Dichtungsmaterialien, die ein Fasermaterial, ein Bindemittel und Graphit als Füllstoff enthalten.

Das US-Patent 4,137,993 offenbart die Verwendung von Glasfasermatten zur Isolierung von Auspuffsystemen.

Die WO 2007/11701 betrifft Schalldämpfer, die ein Verbundmaterial aus langen Fasern und thermoplastischen Polymeren enthalten.

Das US-Patent 4,601,476 betrifft eine Auspuffdichtung auf Basis eines Drahtnetzes und einer Mischung aus metallischen Fasern, nichtmetallischen Füllstoffen und einem Bindemittel.

Das US-Patent 3,660,184 offenbart Methoden zur Herstellung von Dichtungen auf der Basis fibröser Materialien und aushärtbare Bindemittel auf einer Trägerschicht.

### Darstellung der Erfindung

Der Erfindung ilegt daher die Aufgabe zugrunden, eine Abgasstrangdichtung bereitzustellen, welche die genannten Nachteile überwindet. Die Dichtung soll ein hohe Dichtwirkung erzielen, auf einfache Weise handhabbar sein und eine feste Verbindung mit den Abgassträngen ermöglichen.

Die vorliegende Erfindung löst die zuvor genannte Aufgabe durch Abgasstrangdichtungen, Abgasstränge, Verwendungen und Verfahren gemäß den Patentansprüchen.

Gegenstand der Erfindung ist eine Abgasstrangdichtung, enthaltend ein Laminat aus mindestens einer Viiesstoffschicht, die einen Vliesstoff aus anorganischen Fasern und mindestens einen anorganischen Füllstoff aufweist, und mindestens eine Haftklebstoffschicht. Bei der erfindungsgemäßen Dichtung sind die Schichten flächig zu einern Laminat verbunden. Vliesstoffe aus anorganischen Fasern eignen sich für die erfindungsgemäße Dichtung, da sie eine hohe Temperaturbeständigkeit aufweisen. Bevorzugt werden Fasern eingesetzt, deren Erweichungspunkt oberhalb von 300°C, insbesondere oberhalb 500°C oder 1000 °C liegt In einer bevorzugten Ausführungsform der Erfindung sind die anorganischen Fasern ausgewählt aus Silikatfasern. Glasfasern, keramischen Fasern, Basaltfasern und Mineralwolle. Die Fasern können durch ein Faserbindernittel miteinander verbunden sein, beispielsweise Polyvinylacetat (PVA). Dieses Faserbindemittel ist **dadurch gekennzeichnet, dass** es die Fasern verbindet und nicht den Füllstoff fixiert. Besonders bevorzugt sind Silikatfasern, die eine hohe Temperaturbeständigkeit und chemische Beständigkeit und eine textile Haptik aufweisen. Die Silikatfasem können Metalloxide enthalten, beispielsweise Aluminiumoxid oder Calciumoxid.

Das Vlies ist bevorzugt ein Nassvlies. Das Vlies weist bevorzugt ein Flächengewicht von 20 bis 100 g/m², insbesondere etwa 50 g/m², auf.

In einer bevorzugten Ausführungsform der Erfindung ist der Füllstoff Graphit oder Bornitrid. Der Follstoff wird in Form eines feinen Pulvers in den Vliesstoff eingearbeitet. Diese Füllstoffe verbessern die Dichtwirkung der Vliesstoffschicht.

In einer bevorzugten Ausführungsform der Erfindung weist der Vliesstoff mindestens ein Bindemittel auf, das den Füllstoff fixiert. Durch das Bindemittel können die Füllstoffpartikel untereinander oder mit dem Vliesstoff verbunden werden. Dieses Bindemittel kann auch als Füllstoffbindemittel bezeichnet werden. Es dient dazu, den Fallstoff zu stabilisieren und an die Fasem zu fixieren. Es wird so ausgewählt, dass es an die Fasern und an den Füllstoff bindet und bevorzugt eine Matrix in den Hohlräumen des Vlieses bildet. Es unterscheidet sich damit von einem Faserbindemittel, mit dem die anorganischen Fasern des Vlieses miteinander verbunden werden können. In einer bevorzugten Ausführungsform der Erfindung ist das Bindemittel ausgewählt aus organischen Polymeren, insbesondere Elastomeren, und Wachsen.

Als Wachse können natürliche oder synthetische Wachse eingesetzt werden, wobei Paraffinwachse bevorzugt sind.

In einer bevorzugten Ausführungsform wird der Füllstoff in Form eines Gemischs mit dem Bindemittel in den Vliesstoff eingearbeitet. Bevorzugt ist dabei die Verwendung eines Füllstoff/Wachs-Gemischs. Beispielsweise kann die Imprägnierung eines Vliesstoffs mit einem Flächengewicht von 20 bis 100 g/m² mit einem Wachs/Graphit Gemisch so erfolgen, dass nach dem Trocknen 100 bis 200 g/m² Wachs und Graphit in den Vliesstoff eingearbeitet sind. Die Menge an Graphit an der Imprägniermischung kann beispielsweise auf 10 bis 30 Gew.% eingestellt werden.

Die Verwendung eines Bindemittels aus organischen Polymeren erlaubt es, eine Lage mit hoher mechanischer Flexibilität herzustellen. In bevorzugten Ausführungsformen der Erfindung ist das Bindemittel ein Polyester, Polyamid, Polyether, Polycarboxylate, eine Polycarbonsäure, eine Polyvinylverbindung, ein Polyolefin, ein Kautschuk, ein halogeniertes Polymer und/oder ein ungesättigtes Polymer.

Die als Bindemittel eingesetzten organischen Polymere können in Form von Homopolymeren oder als Copolymere eingesetzt werden. Als Copolymere sind beispielsweise statistische Copolymere, Gradientencopolymere, alternierende Copolymere, Blockcopolymere oder Propfpolymere geeignet. Die Copolymere können aus zwei, drei, vier oder mehr verschiedenen Monomeren bestehen (Terpolymere, Tetrapolymere).

Die als Bindemittel eingesetzten organischen Polymere können beispielsweise thermoplastische, elastomere und/oder duroplastische Polymer sein. Beispielhaft seien vor diesem Hintergrund Polyvinylpyrrolidon, Polyacrylsäure, Polyacrylate, Polymethacrylsäure, Polyrnethacrylate, Polystyrol, Polyvinylalkohol, Polyvinylacetat, Polyacrylamid, Polyvinylidenfluorid und Copolymere aus den vorgenannten, Cellulose und deren Derivate, Polyether, Phenolharze, Melaminharze, Polyurethane, Nitrilkautschuk (NBR), Styrolbutadienkautschuk (SBR) sowie Latex genannt

In einer bevorzugten Ausführungsform enthält das Vlies als Bindemittel mindestens ein Wachs und mindestens ein organisches Polymer, insbesondere ein Elastomer. Das Polymer kann beispielsweise 0,1 bis 20 Gew.%, insbesondere 0.5 bis 10 Gew.% der Vliesstoffschicht ausmachen. Das Polymer wird dabei beispielsweise dem Wachs/Füttstoff-Gemisch zugesetzt und zusammen mit diesem in den Vlies eingearbeitet. Alternativ kann das Vlies vor der Einarbeitung des Füllstoffs mit dem Polymer verklebt werden, beispielsweise bei der Vliesherstellung.

Die erfindungsgemäße Dichtung weist eine Klebstoffschicht auf, die zum flächigen Ankleben der Dichtung an einen Abgasstrang dient. Ein Klebstoff ist erfindungsgemäß gemäß der Definition von DIN 16920 ein nicht metallischer Werkstoff, der Körper durch Oberflächenhaftung und innere Festigkeit (Adhäsion und Kohäsion) verbinden kann, ohne dass sich das Gefüge der Körper wesentlich ändert. Erfindungsgemäß dient der Klebstoff als Montagehilfe und zur Verbesserung der Stabilität der Dichtung.

Bevorzugt besteht die Klebstoffschicht aus einem Haftklebstoff. Haftklebstoffe sind nicht aushärtende Klebstoffe. Sie verändern ihren chemischen Zustand beim Verkleben nicht oder im Wesentlichen nicht. Haftkleber unterscheiden sich somit von chemisch härtenden Klebstoffen, die sich beim Verkleben chemisch verändern. Bei der Verwendungstemperatur verfügen Haftkleber über eine permanente Oberflächenklebrigkeit (Tack). Diese Klebrigkeit ermöglicht das Verkleben durch Anpressen und ohne Zuführten von weiterer Energie, wie z.B. Strahlungs- oder Wärmeenergie. Haftklebstoffe unterscheiden sich damit von Schmelzklebstoffen, die bei der Anwendung bei erhöhter Temperatur geschmolzen werden. Typisch für Haftklebstoffe ist ein dynamischer Adhäsionsaufbau, der je nach Haftklebstofftyp, Temperatur und Anpressdruck sowie Anpressdauer wenige Minuten bis mehrere Tage betragen und zu einer unterschiedlich hohen Endfestigkeit führen kann.

Der erfindungsgemäße Einsatz von Haftklebstoffen hat den Vorteil, dass beim Verkleben keine Schadstoffe freigesetzt werden, wie Lösungsmittel oder überschüssige Reaktionsbestandteile. Bei der Montage der Dichtung muss neben dem Anpressdruck auch keine Energie zugeführt werden. Außerdem kann bei der Montage die Position der Dichtung auf dem Substrat korrigiert werden.

In einer bevorzugten Ausführungsform der Erfindung weist die Haftklebstoffschicht mindestens ein organisches Polymer oder Copolymer auf der Basis von Acrylsäureester, Methacrylsäureester, Acrylsäure, Methyacrylsäure, Acrylat, Methacrylat, Vinylacetat, Styrol-Butadien, Polyethylen, Polyurethan oder Naturlatex auf. Es sind auch Mischungen solcher Polymere oder Mischungen, die solche Polymere enthalten, einsetzbar.

Gegebenenfalls können zusätzlich Haftungsverstärker enthalten sein. Geeignete Haftungsverstärker sind beispielsweise Haftharze, wie modifizierte Harzester oder Collophoniumharze.

In einer bevorzugten Ausführungsform wird bei der Herstellung der erfindungsgemäßen Dichtung der als wässrige Dispersion vorliegende Haftkleber mit einem Verdicker verdickt und als Paste auf die Vliesstoffschicht oder die Metallschicht aufgetragen. Die Paste wird nach dem Auftragen getrocknet und beispielsweise durch Verpressen weiter verarbeitet Bevorzugt wird die Haftklebstoffschicht punktförmig aufgetragen, beispielsweise in einem Druckverfahren, wie Rotationsdruck. Dabei können beispielsweise Punkte mit 0,16 bis 2,6 mm Durchmesser in einer Dichte von 0,4 bis 250 Punkten pro cm² aufgetragen werden.

Bevorzugt sind wässrige Dispersionen von Acrylsäureestercopolymeren, Acrylatpolymere oder Copolymere auf der Basis von Butylacrylat, Ethylhexylacrylat, Isooctylacrylat, Styrolacrylat, Copolymere aus Acrylaten mit Vinylestern gesättigter Monocarbonsäuren, wie Versaticsäure (erhältlich unter der Handelsbezeichnung Veova), Copolymere auf der Basis von Vinylacetat und Ethylen; sowie Copolymere auf der Basis von Vinylacetat, Ethylen und Acrylsäureester. Besonders bevorzugt sind Acrylestercopolymere und Styryl-Acrylat Copolymere.

Vorzugsweise enthalten die wässrigen Dispersionen mindestens einen Verdicker, der bevorzugt ein Polymer oder Copolymer auf Acrylatbasis ist. Die Viskosität wird dabei mit dem Verdicker eingestellt. Die Dispersion wird dann beispielsweise als Paste auf Vliesstoff oder Vliesstoffverbund aufgetragen.

In einer bevorzugten Ausführungsform der Erfindung weist die Klebstoffschicht mindestens einen Haftschmelzklebstoff auf. Haftschmelzklebstoffe sind bei Raumtemperatur unter Druckeinwirkung mit dem Werkstoff klebend oder haftend verbindbar. Geeignete Haftschmelzklebstoffe sind thermoplastische Copolymere, die mit nativen oder synthetischen Harzen aufgeschmolzen werden und über Schlitzdüsenauftrag, Walzenauftrag oder Extrusionsauftrag auf den Vliesstoff oder Vliesstoffverbund aufgetragen werden.

In einer bevorzugten Ausführungsform der Erfindung ist die Haftklebstoffschicht mit einer Abdeckschicht verbunden. Abdeckfolien für Haftklebstoffschichten sind nach dem Stand der Technik bekannt. Sie werden vor dem Verkleben abgezogen, so dass die Klebeseite der Dichtung freigesetzt wird. Die Abdeckfolie besteht beispielsweise aus beschichtetem Papier, beispielsweise aus Silikonpapier oder PTFE beschichtetem Papier oder aus einer Polymerfolie, beispielsweise aus Polyethylen.

In einer bevorzugten Ausführungsform der Erfindung weist das Laminat zusätzlich mindestens eine Metallschicht auf. Die Metallschicht ist bevorzugt ein Gewebe aus Drähten. Die metallische Lage bewirkt eine mechanische Stabilisierung der erfindungsgemäßen Dichtung, insbesondere währen der Montage. Sie kann daher innerhalb des Laminats an verschiedenen Positionen enthalten sein. Es ist bevorzugt, dass die Metallschicht aus einem korrosionsbeständigen Metall besteht, beispielsweise aus Edelstahl. Die Metallschicht kann mit der Vliesstoffschicht mechanisch verbunden werden, beispielsweise durch Kalandrieren. Zudem wird eine stabile Verbindung durch das Bindemittel, insbesondere den Wachs, in der Vliesstoffschicht erreicht.

In einer bevorzugten Ausführungsform der Erfindung weist das Laminat eine der folgenden Schichtstrukturen auf:
(A) Eine untere Vliesstoffschicht, eine daran anschließende Klebstoffschicht und gegebenenfalls eine daran anschließende obere Abdeckschicht,
(B) Eine untere Vliesstoffschicht, eine daran anschließende Metallschicht, eine daran anschließende Klebstoffschicht und gegebenenfalls eine daran anschließend obere Abdeckschicht,
(C) Eine untere Vliesstoffschicht, eine daran anschließende Metallschicht, eine daran anschließende Vliesstoffschicht, eine daran anschließende Klebstoffschicht und gegebenenfalls eine daran anschließende obere Abdeckschicht,
(D) Eine untere Metallschicht, eine daran anschließende Vliesstoffschicht, eine daran anschließende Metallschicht, eine daran anschließende Klebstoffschicht und gegebenenfalls eine daran anschließende obere Abdeckschicht, oder
(E) Eine untere Metallschicht, eine daran anschließende Vliesstoffschicht, eine daran anschließende Klebstoffschicht und gegebenenfalls eine daran anschließende obere Abdeckschicht.

Bei diesen Ausführungsformen sind keine weiteren Zwischenschichten enthalten. Die Maßgabe "oben" bezeichnet die Seite, mit der die Dichtung bei der Montage an das Substrat geklebt Dabei wird vorher die Abdeckschicht entfernt, sofern vorhanden. Die Ausführungsform (C) zeichnet sich durch eine besonders gute Dichtungswirkung aus. Die Ausführungsform (D) zeigt beim Verspannen eine besonders hohe Festigkeit, insbesondere Reißfestigkeit sowie Schutz der Vliesschicht vor Zerrüttung, beispielsweise verursacht durch Vibration des Abgasstranges. Ausführungsformen, bei denen eine Vliesstoffschicht außen angeordnet ist, weisen bei der Montage einen angenehmen Griff auf und verringem das Risiko von Handverietzungen.

In einer bevorzugten Ausführungsförm weist die Dichtung eine Dicke von 0,2 bis 1 mm auf.

Gegenstand der Erfindung ist auch die Verwendung des oben beschriebenen Laminats zur Dichtung von Abgassträngen, insbesondere von Kugelzonentulpenverbindungen. Diese Verbindungen sind **dadurch gekennzeichnet, dass** die Teilstränge zueinander gekippt werden können, so dass im Zuge der Montage größere Toleranzen zulässig sind.

Ein weiterer Gegenstand der Erfindung ist ein Verfahren zur Herstellung einer erfindungsgemäßen Abgasstrangdichtung, umfassend die Schritte
(a) Einarbeiten des anorganischen Füllstoffs, gegebenenfalls in Verbindung mit mindestens einem Bindemittel, in den anorganischen Vliesstoff,
(b) gegebenenfalls Verstärken des Vliesstoffs mit einer Metallschicht,
(c) Auftragen einer wässrigen Dispersion mindestens eines Haftklebstoffs auf die Oberfläche der Vliesstoffschicht oder der Metallschicht,
(d) Trocknen des Haftklebstoffs und Verarbeiten des Haftkebstoffs zu einer Haftklebstoffschicht, beispielsweise durch Verpressen.

Gegenstand der Erfindung ist auch ein Abgasstrang, das eine erfindungsgemäße Abgasdichtung enthält.

### Kurzbeschreibung der Zeichnung

Einige Ausführungsbeispiele der erfindungsgemäßen Abgasstrangdichtung werden nachfolgend anhand der Figuren näher erläutert. Diese zeigen, jeweils schematisch:
Fig. 1 eine erste Ausgestaltung einer Abgasstrangdichtung;
Fig. 2 eine zweite Ausgestaltung einer Abgasstrangdichtung mit einer Metallschicht;
Fig. 3 eine dritte Ausgestaltung einer Abgasstrangdichtung mit SandwichStruktur;
Fig. 4 eine vierte Ausgestaltung einer Abgasstrangdichtung mit SandwichStruktur;
Fig. 5 einen Abgasstrang mit Kugelzonentulpenverbinder;
Fig. 6 einen Abgasstrang mit einer T-Schelle.

### Ausführung der Erfindung

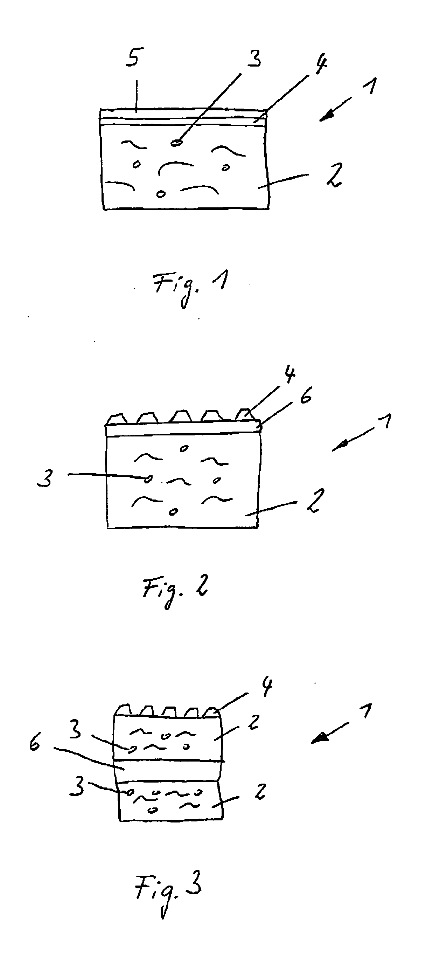

Figur 1 zeigt eine Abgasstrangdichtung 1 bestehend aus einem Laminat aus einer Vliesstoffschicht 2, hier einem Vlies aus textilen Stapelfasern basierend auf einer amorphen mit Al₂O₃ modifizierten Polykieselsäure bzw. Polykieselsäureanhydrid, gebunden durch Polyvinylacetat (PVA), In der Vliesstoffschicht ist eine Imprägnierung enthaltend ein Mikrowachs auf Basis von Paraffin und einem Füllstoff 3 enthaltend Graphit mit einem Mengenanteil von 150 g/m², wovon der Graphitanteil 18 Gew.% der Gesamtmasse der eingebrachten Imprägnierung beträgt, eingebunden. Eine Seite der Vliesstoffschicht 2 ist mit einer Klebstoffschicht 4, bestehend aus 635g/kg eines Haftklebstoffs auf Basis eines Polymeren auf Basis Acrylsäureester (Acronal V 222, BASF AG, Ludwigshafen) und 328g/kg Wasser, die unter Einrühren von 37g/kg eines geeigneten Verdickers, beispielsweise einem Copolymer aus Polyacrylat und Acrylamid (Acraconz FN, Chemtex GmbH, Kempen) auf eine Viskosität von 60000 cp nach Brookfield verdickt wurde, versehen. Zum Transport der Abgasstrangdichtung 1 ist die Klebstoffschicht 4 mit Abdeckfolie 5 versehen. Diese besteht aus einem mit Silikon behandelten Papier. Dieses wird vor der Montage entfernt Die Abgasstrangdichtung 1 weist eine Dicke von 0,5 mm auf. Eine derartige Abgasstrangdichtung 1 ist in Anspruch 10, Alternative (A) beschrieben.

Figur 2 zeigt eine Abgasstrangdichtung 1 mit einer Vliesstoffschicht 2 und einer Klebstoffschicht 4 nach Figur 1, wobei zwischen Vliesstoffschicht 2 und Klebstoffschicht 4 eine Metallschicht 6 aus einem Edelstahlgewebe, bestehend aus Drähten mit einer Drahtstärke von 0,05 mm bei einer Maschenweite von 0,265 mm und einem Flächengewicht von 0,1 kg/m² angeordnet ist. Die Metallschicht 6 ist auf die Vliesstoffschicht 2 auflaminiert und auf der der Vliesstoffschicht 2 abgewandten Seite mit der Klebstoffschicht 4 versehen, die die Metallschicht 6 teilweise durchdringt und dadurch zusätzlich an der Viiesstoffschicht 2 fixiert. Die Abgasstrangdichtung 1 weist eine Dicke von 0,6 mm auf. Eine derartige Abgasstrangdichtung 1 ist in Anspruch 10, Alternative (B) beschrieben.

Figur 3 zeigt eine Abgasstrangdichtung 1 mit einer Vliesstoffschicht 2 und einer Klebstoffschicht 4 nach Figur 1, wobei hier zwei Vliesstoffschichten 2 vorgesehen sind, die beidseitig einer Metallschicht 6 angeordnet sind. Die Metallschicht 6 ist gemäß dem Ausführungsbeispiel nach Figur 2 ausgestaltet Die Klebstoffschicht 4 ist auf einer Vliesstoffschicht 2 angeordnet. Die Dicke der Abgasstrangdichtung 1 beträgt 0,9 mm. Eine derartige Abgasstrangdichtung ist in Anspruch 10, Alternative (C) beschrieben.

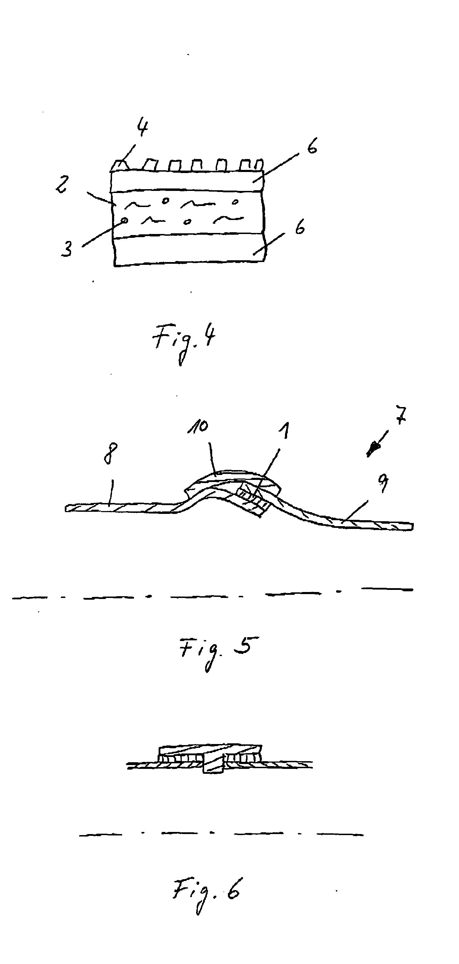

Figur 4 zeigt eine Abgasstrangdichtung 1 mit einer Vliesstoffschicht 2 und einer Klebstoffschicht 4 nach Figur 1, wobei hier zwei Metallschichten 6 vorgesehen sind, die beidseitig einer Vliesstoffschicht 2 angeordnet sind. Die Metallschicht 6 ist gemäß dem Ausführungsbeispiel nach Figur 2 ausgestaltet. Die Klebstoffschicht 4 ist auf einer Metallschicht 6 angeordnet. Die Dicke der Abgasstrangdichtung 1 beträgt 0,7 mm. Eine derartige Abgasstrangdichtung ist in Anspruch 10, Alternative (D) beschrieben.

Figur 5 zeigt einen Teil eines Abgasstranges 7 eines Nutzfahrzeuges mit einem ersten Teilstrang 8 mit einer kugelförmige ersten Querschnittserweiterung und einem zweiten Teilstrang 9 mit einer zweiten tulpenförmigen Querschnittserweiterung die die erste Querschnittserweiterung abschnittsweise überdeckt, wobei in dem sich zwischen erster und zweiter Querschnittserweiterung ergebenden Spalt eine streifenförmig ausgebildete Abgasstrangdichtung 1 gemäß Figur 2 angeordnet ist. Die beiden Teilstränge 8, 9 sind mittels einer Schelle 10 aneinander fixiert.

Figur 6 zeigt einen Teil eines Abgasstranges 7 mit einem ersten Teilstrang 8 und einen zweiten Teilstrang 9 die mittels einer Schelle 10 mit T förmigen Querschnitt miteinander verbunden sind, wobei in dem zwischen den Teitsträngen 8, 9 und der Schelle 10 sich ergebenden Spalt eine streifenförmig ausgebildete Abgasstrangdichtung 1 gemäß Figur 6 angeordnet ist.

Im Folgenden wird die Herstellung einer Abgasstrangdichtung 1 beschrieben:

### 1. Herstellung der Vliesstoffschicht

Es wird eine erfindungsgemäße Abgasstrangdichtung 1 nach dem folgenden Verfahren hergestellt. Es wird ein Nassvlies mit einem Flächengewicht von 50 g/m² eingesetzt. Das Vlies besteht aus textilien Stapelfasern basierend auf einer amorphen mit Al₂O₃ modifizierten Polykieselsäure bzw. Polykieselsäureanhydrid, gebunden durch Polyvinylacetat (PVA). Durch die Imprägnierung wurde nach der Trocknung etwa 150 g/m² Wachs/Graphit in das Vlies eingebracht. Dabei beträgt der Graphitanteil 18 Gew.% der Gesamtmasse der eingebrachten Imprägnierung. Bei dem Wachs handelt es sich um ein Mikrowachs auf Basis von Paraffin.

### 2. Verbinden mit einer Metallschicht

Danach wird ein Edelstahlgewebe, bestehend aus Drähten mit einer Drahtstärke von 0,05 mm bei einer Maschenweite von 0,265 mm und einem Flächengewicht von 0,1 kg/m², unter Ausnutzung der Klebekraft des Wachses in Verbindung mit einer mechanischen Verkrallung in einem Kalanderwerk auflaminiert. Dabei ist der Spalt des Kalanders so eingestellt, dass der Spalt des Kalanders wesentlich kleiner als die Gesamtausgangsdicke der beiden zusammen zu laminierenden Materialien ist (zwischen 0,1 bis 0,3 mm). Danach erfolgt die Klebeausstattung auf der Metallseite die zu einem weiter gesteigerten Halt des Metalls auf dem imprägnierten Vlies führt und den Zusatznutzen aufweist, dass das Vlies danach über eine sehr gute Selbstklebeausstattung verfügt. Zusätzlich weist die Applikation auf der Metallseite den Vorteil auf, dass beim Anpressen des Vlieses beim Einklebevorgang auf das Vlies gedrückt werden kann und so Verletzungen an Metalldrähten nahezu ausgeschlossen werden. Dabei dient die Applikation des Edeldrahtgewebes zu einer mechanischen Verfestigung des Vlieses, um die Reißfestigkeit bei der Applikation (beim Handling und Einkleben) zu erhöhen. Zusätzlich schützt das Metallgewebe bei Vibrationen beim Einbau vor mechanischer Zerrüttung der Weichstoffdichtung (imprägniertes Vlies). Durch die Gewebestruktur wird das Dichtvlies zusätzlich beim späteren Einbau lokal (an den Drähten) höher verpresst und die so geschlossenen Linienzüge bewirken eine zusätzliche Verbesserung des Dichtverhaltens.

### 3. Auftragen der Klebstoffschicht

Bei der Auswahl des Klebers wird die Klebekraft so eingestellt, dass das Vlies dauerhaft und fest hält aber bei der Positionierung noch korrigierbar, d.h. nochmals abziehbar und wieder anklebbar ist und danach immer noch fest und verliersicher bis zum späteren Einbau hält. Hierzu wird eine Kleberpaste, bestehend aus 635g/kg eines Haftklebstoffs auf Basis eines Polymeren auf Basis Acrylsäureester (Acronal V 222, BASF AG, Ludwigshafen) und 328g/kg Wasser, die unter Einrühren von 37g/kg eines geeigneten Verdickers, beispielsweise einem Copolymer aus Polyacrylat und Acrylamid (Acraconz FN, Chemtex GmbH, Kempen) auf eine Viskosität von 60000 cp nach Brookfield verdickt wurde, auf die Metallseite des Vliesstoffs aufgetragen. Die Kleberpaste wird dabei mit einem Rakel durch eine lochförmig perforierte Druckschablone CP 20 (20 Löcher pro cm2) mit Lochdurchmesser 1,0 mm gedrückt und so punktförmig aufgetragen. Anschließend wird der so bedruckte Vliesstoff bei 90°C getrocknet. Die Kleberauflagemenge nach Trocknung beträgt 25g/m². Die Klebstoffschicht wird zum Schutz gegen Verschmutzen, Austrocknen und zur Verhinderung des Verklebens des Vliesstoffs beim Aufrollen mit einem geeigneten Abdecker, bei dem es sich beispielsweise um ein beschichtetes Releasepapier handeln kann, abgedeckt.

### 4. Abdichten einer Kugelzonentulpenverbindung

Aus der so gefertigten Bahnenware werden dann mittels Bandstahleisen für einen Tulpendurchmesser 75 mm Streifen gemäß konischer Abwicklung der Tulpen gefertigt. Dabei wird die Streifenlänge um etwa 10 mm gegenüber der einfachen Abwicklung (πxD) länger gefertigt um beim Klebern der Dichtung eine entsprechende Überlappung der Dichtungsenden zu realisieren. Der Krümmungsradius des abgewickelten Streifens wurde um 100 mm gegenüber der einfachen Abwicklung verkleinert, um eine optimale Anpassung, insbesondere an der oberen Dichtungskante zu realisieren. Die Enden werden darüber hinaus mit einem um 45° abgeschrägten Ende (Schrägschnitt) versehen, um an der Überiappungsstelle einen möglichst sanften Übergang zu realisieren, wodurch sich eine über den Umfang gleichmäßige Dichtwirkung ergibt. Das Einkleben der Abgasstrangdichtung kann dann sowohl auf der Außenfläche der kugelförmigen ersten Querschnittserweiterung als auch auf der Innenseite der zweiten tulpenförmigen Querschnittserweiterung, wobei das Aufkleben auf der Innenseite den Vorteil des Schutzes der Dichtung vor Beschädigungen bei Transport und Lagerung bietet.

## Patentansprüche

1. Abgasstrangdichtung (1), enthaltend ein Laminat aus mindestens einer Vliesstoffschicht (2), die einen Vliesstoff aus anorganischen Fasern und mindestens einen anorganischen Füllstoff (3) aufweist, und mindestens eine Klebstoffschicht (4).

2. Abgasstrangdichtung nach Anspruch 1, wobei die Fasern ausgewählt sind aus Silikatfasern, Glasfasern, keramischen Fasern, Basaltfasern und Mineralwolle.

3. Abgasstrangdichtung nach mindestens einem der vorhergehenden Ansprüche, wobei der Füllstoff (3) Graphit oder Bornitrid ist.

4. Abgasstrangdichtung nach mindestens einem der vorhergehenden Ansprüche, wobei der Vliesstoff mindestens ein Bindemittel aufweist, das den Füllstoff (3) fixiert.

5. Abgasstrangdichtung nach Anspruch 4, wobei das Bindemittel ausgewählt ist aus organischen Polymeren, insbesondere Elastomeren, und Wachsen.

6. Abgasstrangdichtung nach mindestens einem der vorhergehenden Ansprüche, wobei die Klebstoffschicht (4) eine Haftklebstoffschicht ist und mindestens ein organisches Polymer oder Copolymer auf der Basis von Acrylsäureester, Methacrylsäureester, Acrylsäure, Methyacrylsäure, Acrylat, Methycrylat, Vinylacetat, Styrol-Butadien, Styrol-Acrylat, Polyethylen, Polyurethan oder Naturlatex aufweist.

7. Abgasstrangdichtung nach mindestens einem der vorhergehenden Ansprüche, wobei die Klebstoffschicht (4) mindestens einen Haftschmelzklebstoff aufweist

8. Abgasstrangdichtung nach mindestens einem der vorhergehenden Ansprüche, wobei die Klebstoffschicht (4) mit einer Abdeckschicht (5) verbunden ist.

9. Abgasstrangdichtung nach mindestens einem der vorhergehenden Ansprüche, wobei das Laminat zusätzlich mindestens eine Metallschicht (6) aufweist.

10. Abgasstrangdichtung nach mindestens einem der vorhergehenden Ansprüche, wobei das Laminat eine der folgenden Schichtstrukturen aufweist:
(A) Eine untere Vliesstoffschicht (2), eine daran anschließende Klebstoffschicht (4) und gebenenfalls eine daran anschließende obere Abdeckschicht (5);
(B) Eine untere Vliesstoffschicht (2), eine daran anschließende Metallschicht (6), eine daran anschließende Klebstoffschicht (4) und gegebenenfalls eine daran anschließende obere Abdeckschicht (5);
(C) Eine untere Vliesstoffschicht (2), eine daran anschließende Metallschicht (6), eine daran anschließende Vliesstoffschicht (2), eine daran anschließende Klebstoffschicht (4) und gegebenenfalls eine daran anschließende obere Abdeckschicht (5);
(D) Eine untere Metallschicht (6), eine daran anschließende Vliesstoffschicht (2), eine daran anschließende Metallschicht (6), eine daran anschließende Klebstoffschicht (4) und gegebenenfalls eine daran anschließende obere Abdeckschicht (5) und
(E) Eine untere Metallschicht (6), eine daran anschließende Vliesstöffschicht (2), eine daran anschließende Klebstoftschicht (4) und gegebenenfalls eine daran anschließende obere Abdeckschicht (5).

11. Verwendung eines Laminats gemäß mindestens einem der vorhergehenden Ansprüche zur Dichtung von Abgassträngen (7).

12. Verfahren zur Herstellung einer Abgasstrangdichtung (1) nach mindestens einem der vorhergehenden Ansprüche, umfassend die Schritte
(a) Einarbeiten des anorganischen Füllstoffs in den anorganischen Vliesstoff,
(b) Gegebenenfalls Verstärken des Vliesstoffs mit einer Metallschicht,
(c) Auftragen einer wässrigen Dispersion mindestens eines **-** Klebstoffs auf die Oberfläche der Vliesstoffschicht oder der Metallschicht,
(d) Trocknen des Haftklebstoffs und Verarbeiten des Klebstoffs zu einer Klebstoffschicht, beispielsweise durch Verpressen.

13. Abgasstrang, enthaltend eine Abgasstrangdichtung (1) gemäß mindestens einem der vorhergehenden Ansprüche.

14. Abgasstrang nach Anspruch 13, umfassend einen ersten Teilstrang (8) mit einer kugelförmigen ersten Querschnittserweiterung und einen zweiten Teilstrang (9) mit einer zweiten tulpenförmigen Querschnittserweiterung die die erste Querschnittserweiterung abschnittsweise überdeckt, wobei in dem sich zwischen erster und zweiter Querschnittserweiterung ergebenden Spalt eine streifenförmig ausgebildete Abgasstrangdichtung (1) nach einem der vorherigen Ansprüche angeordnet ist.

15. Abgasstrang nach Anspruch 13, umfassend einen ersten Teilstrang (8) und einen zweiten Teilstrang (9) die mittels einer Schelle (10) mit T-förmigen Querschnitt miteinander verbunden sind, wobei in dem zwischen den Teilsträngen (8, 9) und der Schelte (10) sich ergebenden Spalt eine streifenförmig ausgebildete Abgasstrangdichtung (1) nach einem der vorherigen Ansprüche angeordnet ist.

## Claims

1. Exhaust section seal (1), including a laminate of at least one nonwoven fabric layer (2), which comprises a nonwoven fabric of inorganic fibres and at least one inorganic filler (3), and at least one adhesive layer (4).

2. Exhaust section seal according to Claim 1, the fibres being selected from silicate fibres, glass fibres, ceramic fibres, basalt fibres and mineral wool.

3. Exhaust section seal according to at least one of the preceding claims, the filler (3) being graphite or boron nitride.

4. Exhaust section seal according to at least one of the preceding claims, the nonwoven fabric comprising at least one binder, which fixes the filler (3).

5. Exhaust section seal according to Claim 4, the binder being selected from organic polymers, particularly elastomers, and waxes.

6. Exhaust section seal according to at least one of the preceding claims, the adhesive layer (4) being a contact adhesive layer and comprising at least one organic polymer or copolymer on the basis of acrylic ester, methacrylic ester, acrylic acid, methacrylic acid, acrylate, methacrylate, vinyl acetate, styrene butadiene, styrene acrylate, polyethylene, polyurethane or natural latex.

7. Exhaust section seal according to at least one of the preceding claims, the adhesive layer (4) comprising at least one hotmelt contact adhesive.

8. Exhaust section seal according to at least one of the preceding claims, the adhesive layer (4) being joined to a covering layer (5).

9. Exhaust section seal according to at least one of the preceding claims, the laminate additionally comprising at least one metal layer (6).

10. Exhaust section seal according to at least one of the preceding claims, the laminate comprising one of the following layer structures:
(A) a lower nonwoven fabric layer (2), an adhesive layer (4) adjoining thereto and, if appropriate, an upper covering layer (5) adjoining thereto;
(B) a lower nonwoven fabric layer (2), a metal layer (6) adjoining thereto, an adhesive layer (4) adjoining thereto and, if appropriate, an upper covering layer (5) adjoining thereto;
(C) a lower nonwoven fabric layer (2), a metal layer (6) adjoining thereto, a nonwoven fabric layer (2) adjoining thereto, an adhesive layer (4) adjoining thereto and, if appropriate, an upper covering layer (5) adjoining thereto;
(D) a lower metal layer (6), a nonwoven fabric layer (2) adjoining thereto, a metal layer (6) adjoining thereto, an adhesive layer (4) adjoining thereto and, if appropriate, an upper covering layer (5) adjoining thereto, and
(E) a lower metal layer (6), a nonwoven fabric layer (2) adjoining thereto, an adhesive layer (4) adjoining thereto and, if appropriate, an upper covering layer (5) adjoining thereto.

11. Use of a laminate according to at least one of the preceding claims for the sealing of exhaust sections (7).

12. Method for producing an exhaust section seal (1) according to at least one of the preceding claims, comprising the steps of
(a) working the inorganic filler into the inorganic nonwoven fabric,
(b) if appropriate, reinforcing the nonwoven fabric with a metal layer,
(c) applying an aqueous dispersion of at least one adhesive to the surface of the nonwoven fabric layer or of the metal layer,
(d) drying the contact adhesive and processing the adhesive to form an adhesive layer, for example by pressing.

13. Exhaust section, including an exhaust section seal (1) according to at least one of the preceding claims.

14. Exhaust section according to Claim 13, comprising a first sub-section (8) with a spherical first cross-sectional widening and a second sub-section (9) with a second, tulip-shaped cross-sectional widening, which covers over the first cross-sectional widening in certain portions, an exhaust section seal (1) in strip form according to one of the preceding claims being arranged in the gap obtained between the first and second cross-sectional widenings.

15. Exhaust section according to Claim 13, comprising a first sub-section (8) and a second sub-section (9), which are connected to each other by means of a clip (10) with a T-shaped cross section, an exhaust section seal (1) in strip form according to one of the preceding claims being arranged in the gap obtained between the sub-sections (8, 9) and the clip (10),

## Revendications

1. Joint d'étanchéité (1) pour conduit d'échappement, contenant un stratifié constitué d'au moins une couche de feutre (2) qui présente un feutre en fibres minérales et au moins une charge minérale (3), ainsi qu'au moins une couche d'adhésif (4).

2. Joint d'étanchéité pour conduit d'échappement selon la revendication 1, dans lequel les fibres sont sélectionnées parmi les fibres de silicate, les fibres de verre, les fibres céramiques, les fibres de basalte et les laines minérales.

3. Joint d'étanchéité pour conduit d'échappement selon au moins l'une des revendications précédentes, dans lequel la charge (3) est le graphite ou le nitrure de bore.

4. Joint d'étanchéité pour conduit d'échappement, dans lequel le feutre présente au moins un liant qui fixe la charge (3).

5. Joint d'étanchéité pour conduit d'échappement selon la revendication 4, dans lequel le liant est sélectionné parmi les polymères organiques, en particulier les élastomères, et les cires.

6. Joint d'étanchéité pour conduit d'échappement selon au moins l'une des revendications précédentes, dans lequel la couche d'adhésif (4) est une couche d'adhésif et présente au moins un polymère ou copolymère organique à base d'ester d'acide acrylique, d'ester d'acide méthacrylique, d'acide acrylique, d'acide méthacrylique, d'acrylate, de méthacrylate, d'acétate de vinyle, de styrène-butadiène, de styrène-acrylate, de polyéthylène, de polyuréthane ou de latex naturel.

7. Joint d'étanchéité pour conduit d'échappement selon au moins l'une des revendications précédentes, dans lequel la couche d'adhésif (4) présente au moins un adhésif fusible.

8. Joint d'étanchéité pour conduit d'échappement selon au moins l'une des revendications précédentes, dans lequel la couche d'adhésif (4) est reliée à une couche de recouvrement (5).

9. Joint d'étanchéité pour conduit d'échappement selon au moins l'une des revendications précédentes, dans lequel le stratifié présente en outre au moins une couche métallique (6).

10. Joint d'étanchéité pour conduit d'échappement selon au moins l'une des revendications précédentes, dans lequel le stratifié présente une des structures stratifiées suivantes :
(A) une couche inférieure de feutre (2) à laquelle se raccorde une couche d'adhésif (4) à laquelle se raccorde éventuellement une couche supérieure de recouvrement (5),
(B) une couche inférieure de feutre (2) à laquelle se raccorde une couche métallique (6) à laquelle se raccorde une couche d'adhésif (4) à laquelle se raccorde éventuellement une couche supérieure de recouvrement (5),
(C) une couche inférieure de feutre (2) à laquelle se raccorde une couche métallique (6) à laquelle se raccorde une couche de feutre (2) à laquelle se raccorde une couche d'adhésif (4) à laquelle se raccorde éventuellement une couche supérieure de recouvrement (5),
(D) une couche inférieure métallique (6) à laquelle se raccorde une couche de feutre (2) à laquelle se raccorde une couche métallique (6) à laquelle se raccorde une couche d'adhésif (4) à laquelle se raccorde éventuellement une couche supérieure de recouvrement (5) et
(E) une couche métallique inférieure (6) à laquelle se raccorde une couche de feutre (2) à laquelle se raccorde une couche d'adhésif (4) à laquelle se raccorde éventuellement une couche supérieure de recouvrement (5).

11. Utilisation d'un stratifié selon au moins l'une des revendications précédentes pour assurer l'étanchéité de conduits d'échappement (7).

12. Procédé de fabrication d'un joint d'étanchéité (1) pour conduit de gaz d'échappement selon au moins l'une des revendications précédentes, le procédé comportant les étapes qui consistent à :
(a) incorporer la charge minérale dans le feutre minéral,
(b) éventuellement, renforcer le feutre d'une couche métallique,
(c) appliquer une dispersion aqueuse d'au moins un adhésif sur la surface de la couche de feutre ou de la couche métallique et
(d) sécher la couche d'adhésif et transformer l'adhésif en une couche d'adhésif, par exemple par compression.

13. Conduit de gaz d'échappement contenant un joint d'étanchéité (1) de conduit de gaz d'échappement selon au moins l'une des revendications précédentes.

14. Conduit de gaz d'échappement selon la revendication 13, comprenant une première partie (8) de conduit dotée d'un premier évasement de section transversale de forme sphérique et une deuxième partie (9) de conduit dotée d'un deuxième évasement de section transversale en forme de tulipe qui recouvre partiellement le premier évasement de section transversale, un joint d'étanchéité (1) de conduit de gaz d'échappement en forme de ruban selon l'une des revendications précédentes étant disposé dans l'interstice présent entre le premier et le deuxième évasement de section transversale.

15. Conduit de gaz d'échappement selon la revendication 13, comprenant une première partie (8) de conduit et une deuxième partie (9) de conduit reliées l'une à l'autre au moyen d'une coquille (10) de section transversale en forme de T, un joint d'étanchéité (1) de conduit de gaz d'échappement en forme de ruban selon l'une des revendications précédentes étant disposé dans l'interstice formé entre les parties (8, 9) de conduit et la coquille (10).
